# EUROPEAN PATENT APPLICATION

(11) **EP 1 610 334 A2**
(43) Date of publication of application: **28.12.2005**
(21) Application number: 05012028.6
(22) Date of filing: 03.06.2005
(51) Int. Cl.: G11B 33/08

(54) **Damping system**

(30) Priority: 04.06.2004 JP 2004166953
(71) Applicant: Pioneer Corporation, Tokyo 153-0063 (JP); Tohoku Pioneer Corporation, Tendo-shi, Yamagata 994-0012 (JP)
(72) Inventor: Sugiura, Hideaki, c/o Tohoku Pioneer Corporation, Yamagata 994-0012 (JP)
(74) Representative: Grünecker, Kinkeldey, Stockmair & Schwanhäusser Anwaltssozietät

(57) **Abstract**

For providing a damping system to supply good sound characteristics of a speaker, the damping system includes an inner panel, a speaker and a damping device. The inner panel is vibrated by the speaker. The inner panel is provided on a surface thereof with a mounting portion of the damping device. The damping device has an elastic member and a mass. The elastic member is mounted at the mounting portion. The mass is mounted on the elastic member. When the mass vibrates against the elastic member, natural frequency of the damping device is equal to natural frequency of the mounting portion.

## Description

### BACKGROUND OF THE INVENTION

### Field of the Invention

This invention relates to a damping system for damping vibration of a frame, on which a speaker is mounted, caused by the speaker.

### Description of the Related Art

Generally, a speaker to be mounted on a door panel of a car includes a speaker unit having a vibration member and a magnetic circuit for generating sounds by vibrating the vibration member, and a case receiving the speaker unit. The vibration member includes a voice coil to be disposed in a later-described magnetic gap of the magnetic circuit, and a vibrating plate to vibrate freely together with the voice coil.

The magnetic circuit includes a yoke plate formed into a ring shape with a magnetic material and connected through a damper with the vibrating plate, a magnet mounted on the yoke plate, and a yoke made of the magnetic material and mounted on the magnet for forming the magnetic gap between the yoke plate to generate a magnetic force for driving (vibrating) the vibrating plate.

The case is formed into a blind end tube shape having a bottom wall and a tube extending from an outer edge of the bottom wall. The case receives the speaker unit so as to expose the vibrating plate out of the case. The case is fixed on the yoke of the magnetic circuit, and mounted on the door panel.

The speaker structured as mentioned above generates sounds corresponding to sound current by supplying the sound current to the voice coil to vibrate the voice coil and the vibrating plate. In the speaker by prior art, sound current is supplied into the voice coil to vibrate the voice coil for generating sounds. Thereby, a reaction against the vibration of the coil vibrates the yoke and the case. By the vibration of the case, the door panel is vibrated. Unexpected sounds generated by the vibration of the door panel are added on sounds generated by the speaker unit. Thereby, the speaker unit cannot securely play back sounds, especially bass sounds.

In the usual damping system, a damping material, such as asphalt, is pasted on a whole surface of the door panel for damping the vibration of the door panel quickly.

### Objects to be solved

Since the aforesaid damping system by prior art is by pasting the damping material like asphalt on the whole surface of the door panel, weight of the door panel, that is, weight of the car is increased. Furthermore, since the damping system by prior art is by pasting the damping material having relative large mass on the door panel, vibration in a range of relative high frequency can be attenuated easily, but vibration in a range of relative low frequency cannot be attenuated. Thus, the damping system by prior art cannot eliminate securely unexpected sounds by vibration of the door panel.

To overcome the above problem, one object of this invention is to provide a damping system, which can perform good acoustic characteristics of a speaker.

### SUMMARY OF THE INVENTION

### How to attain the object

In order to attain the objects, a damping system according to claim 1 of this invention is specified by having a frame, a speaker being mounted on the frame, and a damping device being mounted on the frame, and by that the damping device includes an elastic member mounted on the frame and a mass mounted on the elastic member.

### DESCRIPTION OF THE BEST MODE

One embodiment of a damping system according to this invention will be described herein. In the damping system according to this embodiment, to mount the damping device having the elastic member and the mass mounted on the elastic member on the frame where the speaker is mounted, vibration of the frame can be attenuated when the frame is vibrated. Thereby, good acoustic characteristics of a speaker can be performed.

According to this invention, the damping device can include a plurality of units.

Furthermore, according to this invention, a natural frequency of the damping device can be made equal to a natural frequency of the mounting portion.

The above and other objects and features of this invention will become more apparent from the following description taken in conjunction with the accompanying drawings.

### BRIEF DESCRIPTION OF THE DRAWINGS

Fig. 1 is a perspective view of a damping system of one embodiment according to this invention;
Fig. 2 is a cross-sectional view of a speaker of the damping system shown in Fig. 1;
Fig. 3A is a perspective view of a damping device of the damping system shown in Fig. 1;
Fig. 3B is a cross-sectional view taken along line 3B-3B in Fig. 3A;
Fig. 4 is a cross-sectional view showing one condition in vibration of the inner panel of the damping system shown in Fig. 3B; and
Fig. 5 is a cross-sectional view showing the other condition in vibration of the inner panel of the damping system shown in Fig. 3B.

### DESCRIPTION OF EMBODIMENTS

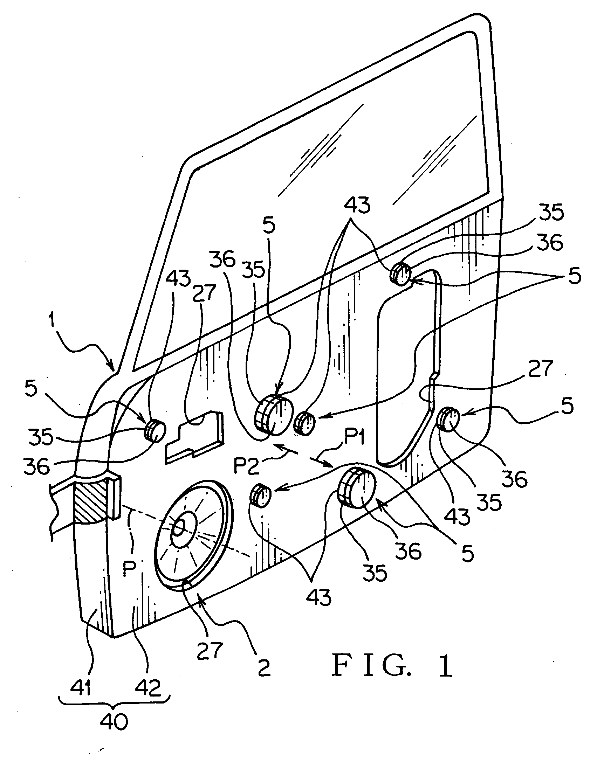

The first embodiment according to the present invention will be described with reference to Figs. 1-5. A damping system 1 according to the first embodiment includes a door panel 40 structuring a car body of a vehicle, a speaker 2 mounted on the door panel 40, and a plurality of damping devices 5 mounted on the door panel 40.

The door panel 40 includes an outer panel 41 and an inner panel 42 to be mounted on the outer panel 41. The outer and inner panels 41, 42 are made by roll-forming a steel sheet metal. A door glass (not shown) is received between the outer and inner panels 41, 42. The door panel 40 is mounted on the car body with a hinge, and supported rotatably by the hinge. To rotate the door panel 40 by the hinge, a car room is opened and closed.

On the inner panel 42, the speaker 2 and electronic devices (not shown), such as a motor for a power regulated window and an actuator for door locking are mounted. The inner panel 42 is provided with a plurality of holes 27 for receiving the speaker 2 and electronic devices, such as a motor for a power regulated window and an actuator for door locking. The inner panel 42 corresponds to a frame described in an aspect of the present invention.

The inner panel 42 vibrates along directions P1, P2 parallel to an axis of the speaker 2 when the speaker generates sounds as describing later. Resonance frequencies of vibration along the directions P1, P2 of the inner panel 42 are different from each other by depending on positions thereof. Generally, the natural frequency becomes smaller corresponding to approaching to the center of the inner panel 42, and the natural frequency becomes larger corresponding to approaching to an outer edge of the inner panel 42.

The natural frequency in this specification includes a general natural frequency of each body, such as the damping device 5 and the inner panel 42, and an "n" dimension natural frequency at an "n" dimension vibration mode of the each body, such as the damping device 5 and the inner panel 42 (n is natural number).

The inner panel 42 is provided at the surface thereof with a plurality of mounting portions 43. The mounting portions 43 are vibrated by sounds generated by the speaker 2. Thereby, at least two resonance frequencies at the mounting portions 43 are different from each other. The damping devices 5 are mounted respectively at mounting portions 43.

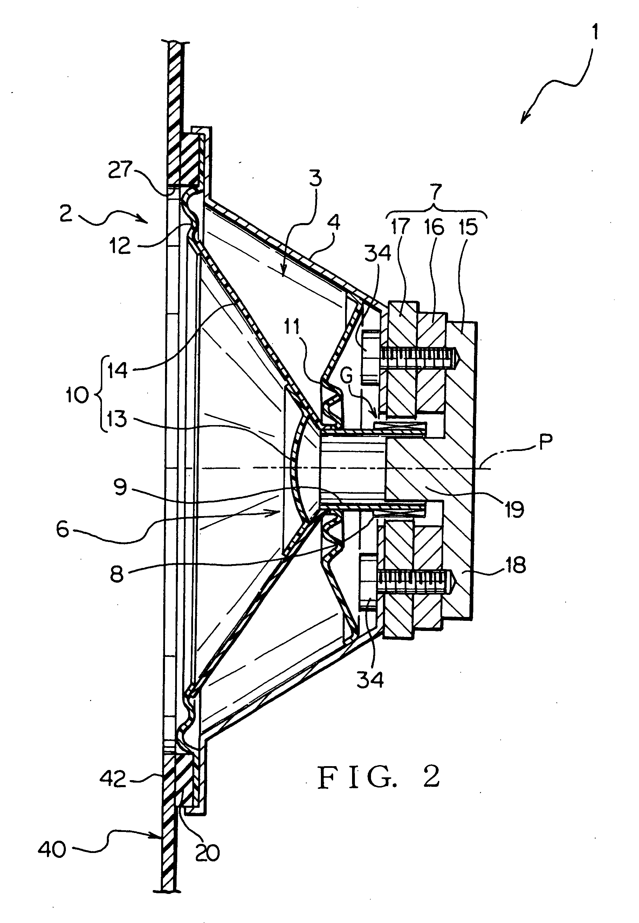

The speaker 2 has a speaker unit 3 and a case 4 as shown in Fig. 2. The speaker unit 3 includes a vibrating member 6 and a magnetic circuit 7 for vibrating the vibrating member 6 to generate sounds.

The vibrating member 6 has a voice coil 8, a voice coil bobbin 9, a vibrating plate 10, a damper 11 and an edge ring 12. The voice coil 8 is disposed coaxially with a later-described yoke 15 and a yoke plate 17 of the magnetic circuit 7, and within a later-described magnetic gap G of the magnetic circuit 7. Sound current is supplied to the voice coil 8.

The voice coil bobbin 9 is formed into a cylindrical shape. The voice coil bobbin 9 is disposed coaxially with the yoke 15, the yoke plate 17 and the voice coil 8. One end of the voice coil bobbin 9 in an axial direction thereof is inserted in the magnetic gap G. The voice coil 8 is mounted on an outer wall of the one end. The coil bobbin 9 is supported to move freely along an axis P of the yoke 15 (shown with a long dashed short dashed line in Fig. 2).

The vibrating plate 10 has a center cap 13 with a cross-section of an arc shape and a plan view of a circular disk shape, and a cone 14 with a side view of a circular truncated cone and a plan view of a ring shape. The cone 14 is disposed coaxially with the center cap 13, that is, the yoke 15. An inner edge of the cone 14 is connected with the other end of the voice coil bobbin 9. An outer edge of the center cap 13 is connected with the cone 14 to cover the voice coil bobbin 9.

The damper 11 is formed into a thin plate ring shape in plan view. An inner edge of the damper 11 is connected with the voice coil bobbin 9, and an outer edge thereof is connected with an inner surface of the case 4. The damper 11 allows the voice coil bobbin 9 to vibrate along the axis P. The damper 11 attenuates gradually the vibration of the voice coil bobbin 9.

The edge ring 12 is formed into a thin plate ring shape in plan view. An inner edge of the edge ring 12 is connected with an outer edge of cone 14, and an outer edge thereof is connected with an outer surface of the case 4. The edge ring 12 allows the voice coil bobbin 9 to vibrate along the axis P. The edge ring 12 attenuates gradually the vibration of the voice coil bobbin 9.

The magnetic circuit 7 includes the yoke 15 made of magnetic material (paramagnetic material or ferromagnetic material), a magnet 16, and the yoke plate 17 made of magnetic material (paramagnetic material or ferromagnetic material) . The yoke 15 has integrally a bottom plate 18 with a circular disk shape and a cylindrical center pole 19 projecting coaxially with the bottom plate 18 from the center of the bottom plate 18. An outer diameter of the bottom plate 18 is larger than that of the center pole 19. The yoke 15 is disposed on condition that a far-side end of the center pole 19 from the bottom plate 18 penetrates into the one end of the voice coil bobbin 9.

The magnet 16 is formed into a circular ring shape. The magnet 16 is a permanent magnet or an electromagnet to be magnetized by direct current. The magnet 16 is stacked on the bottom plate 18 of the yoke 15 to locate the center pole 19 of the yoke 15 within a center hole of the magnet 16.

The yoke plate 17 is formed into a circular ring shape. The yoke plate 17 is stacked on the magnet 16 so as to locate the center pole 19 of the yoke 15 within a center hole of the yoke plate 17. The yoke 15, the magnet 16 and the yoke plate 17 are fastened to an inner edge of the case 4 with bolts 34. The yoke 15, the magnet 16 and the yoke plate 17 are disposed coaxially with each other. An outer surface of the center pole 19 of the yoke 15 and an inner surface of the yoke plate 17 have a distance from each other.

According to a structure as mentioned above, the magnetic circuit 7 is formed as an external magnet type. In the magnetic circuit 7, the magnetic gap G for generating magnetic force to drive (vibrate) the vibrating plate 10 in cooperation with the voice coil 8 is formed between the outer surface of the center pole 19 of the yoke 15 and the inner surface of the yoke plate 17.

According to the speaker unit 3 structured as mentioned above, by supplying sound current into the voice coil 8, the voice coil 8 supported within the gap G vibrates along the aforesaid axis P corresponding to the sound current. Thereby, the voice coil bobbin 9 supporting the voice coil 8 vibrates along the axis P together with the center cap 13 and the cone 14 of the vibrating plate 10. Therefore, the center cap 13 and the cone 14 of the vibrating plate 10 generate sounds corresponding to the sound current. Thus, the magnetic circuit 7 vibrates the vibrating plate 10, that is, the vibrating member 6 for generating sounds.

The case 4 is formed into a thin plate circular truncated cone shape in side view and a circular ring shape in plan view. The case 4 is mounted on the yoke plate 17, the magnet 16 and the yoke 15 so as to stack the inner edge of the case 4 on the yoke plate 17. An outer edge of the case 4 is fixed through the edge ring 12 and a gasket 20 on the inner panel 42. In other words, The gasket 20 and the edge ring 12 are clamped between the inner panel 42 and the outer edge of the case 4. The gasket 20 is made of an elastic material, such as rubber, for restraining transmission of vibration of speaker 2 to the inner panel 42.

The aforesaid speaker 2 is inserted into the hole 27 to make the axis P perpendicular to a surface of the inner panel 42 and expose the vibrating plate 10, and fixed on the inner panel 42. Therefore, the axis P of the speaker 2 and an axis of the damping device 5 are parallel to each other.

A plurality of damping devices 5 is mounted respectively at the mounting portions 43 on the surface of the inner panel 42. A natural frequency of each damping device 5 when a later-described mass 36 vibrates relatively against an elastic member 35 along the axis P is equalized with a first natural frequency of each mounting portion 43, where each damping device 5 is mounted, vibrating along the axis P. Thus, the natural frequency of each damping device 5 is equal to the natural frequency of each mounting portion 43 where each damping device 5 is mounted.

By adj usting each outer diameter and thickness of the elastic member 35 and the mass 36, the natural frequency of each damping device 5 is equalized with the natural frequency of each mounting portion 43.

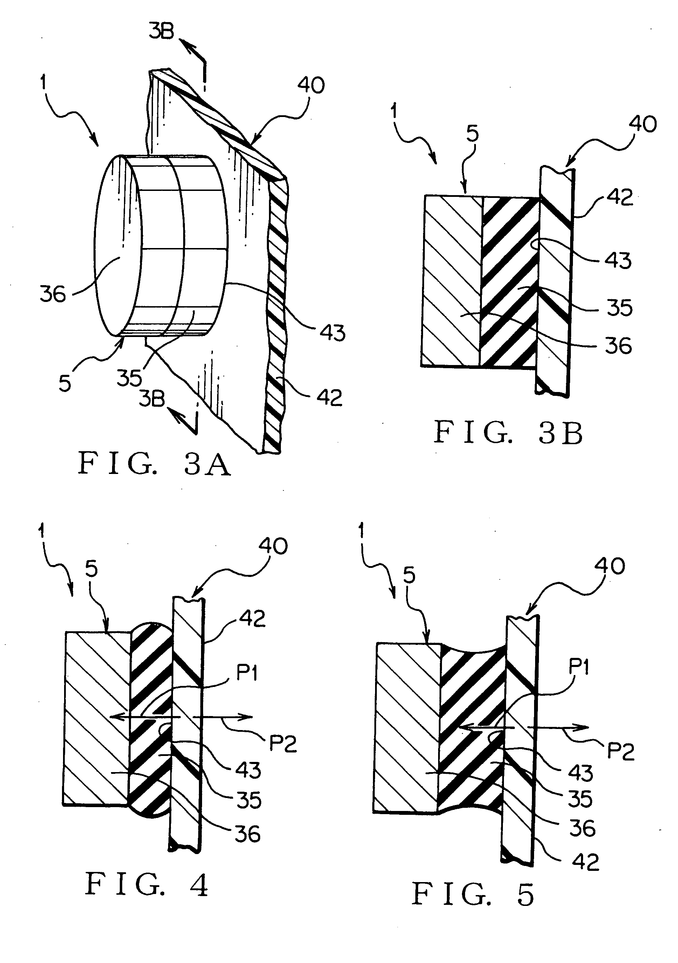

The damping device 5 has the elastic member 35 made of an elastic material such as rubber and the mass 36 as shown in Figs. 3A, 3B. The elastic member 35 is mounted on the aforesaid mounting portion 43. The elastic member 35 can be made of silicon rubber. The elastic member 35 is formed into a circular disk shape. The elasticmember 35 is stacked on the mounting portion 43 and mounted at the mounting portion 43.

The mass 36 is formed into a thin circular disk shape. The mass 36 is stacked on the elastic member 35 and mounted thereon. In this embodiment, the mass 36 is made of a material which specific gravity is larger than that of aluminum alloy as a material for the case 4.

In the damping system 1 structured as mentioned above, when the vibrating plate 10 is vibrated along the axis P by supplying the sound current into the voice coil 8 of the speaker unit 3 in the speaker 2, the yoke 15 vibrates along the axis P oppositely against the vibration of the vibrating plate 10. Therefore, vibration of the yoke 15 is transmitted through the case 4 to the inner panel 42, so that each mounting portion 43 of the inner panel 42 vibrates oppositely against the vibrating plate 10.

Thereby, the mass 36 is maintained at the present position by inertia. The mass 36 vibrates oppositely against the vibration of the inner panel 42 and relatively with the inner panel 42. The natural frequency of the damping device 5 is equal to the natural frequency of the mounting portion 43. Therefore, the mass 36 of the damping device 5 vibrates against the inner panel 42 oppositely to the vibration of the inner panel 42 at the same frequency as the vibration of the inner panel 42. The elastic member 35 is provided between the mass 36 and the inner panel 42, so that the elastic member 35 pushes the inner panel 42 to the mass 36 and pulls the inner panel 42 from the mass 36 oppositely against the vibration of the inner panel 42.

When the mounting portion 43 of the inner panel 42 moves along the arrow P1 shown in Fig. 4, the elastic member 35 pushes the inner panel 42 along the arrow P2 opposite to the arrow P1 by the inertia of the mass 36. When the inner panel 42 moves along the arrow P2 shown in Fig. 5, the elastic member 35 pulls the inner panel 42 along the arrow P1 opposite to the arrow P2 by the inertia of the mass 36.

Thus, the vibration of the inner panel 42, that is, the case 4 and the magnetic circuit 7 generated by reaction of the vibration of the vibrating plate 10 can be attenuated rapidly by the damping device 5.

In this embodiment, the damping device 5 having the elastic member 35 and the mass 36 is provided at the inner panel 42 where the speaker 2 is mounted. When the speaker 2 vibrates the inner panel 42, the mass 36 is maintained at the present position by its inertia. Thereby, the mass 36 moves relatively against the inner panel 42 in an opposite direction of the vibration of the inner panel 42. Since the mass 36 and the inner panel 42 are connected together by the elastic member 35, the inner panel 42 is pushed to the mass 36 and pulled from the mass 36 through the elastic member 35 in the opposite direction of the vibration. Therefore, when the inner panel 42 is vibrated, the vibration of the inner panel 42 can be attenuated rapidly. Unexpected sound caused by the vibration of the inner panel 42 can be prevented from adding on the sound generated by the speaker 2, so that good sound characteristics can be given.

The plurality of damping devices 5 is provided, so that the vibrations at positions of the inner panel 42 can be attenuated rapidly and securely.

Since the natural frequency of each damping devices 5 is equal to the natural frequency of each mounting portion 43 of the inner panel 42, the mass 36 of the damping device 5 vibrates relatively against the inner panel 42 oppositely to the mounting portion 43 at the same frequency as the vibration of each mounting portion 43 when the mounting portion 43 of the inner panel 42 vibrates. Thereby, the vibrations of the inner panel 42 can be attenuated rapidly and securely. Therefore, unexpected sound caused by the vibration of the inner panel 42 can be prevented from adding on the sound generated by the speaker 2, so that good sound characteristics can be given.

In the embodiment mentioned above, rubber is used as the elastic member 35. Thereby, comparing with use of a spring as the elastic member 35, the elastic member 35 can be prevented from elastic deformation thereof by moving the mass 36 down by gravity. Since the rubber is used as the elastic member 35, weight of the elastic member can be reduced. The elastic member 35 can be easily formed (manufactured) and easily mounted on the inner panel 42 and the mass 36.

In the embodiment mentioned above, the damping device 5 is mounted on the inner panel 42. The door panel 40 structured by the inner panel 42 is designed without attenuation of the vibration of case 4 of the speaker 2, so that good sound characteristics can be given by attenuating the vibration of the case 4 of the speaker 2.

In the embodiment mentioned above, the speaker 2 is mounted on the inner panel 42 of the door panel of the car. According to the present invention, the speaker 2 and the damping device 5 can be mounted on various panels such as a rear tray of the car, and can be mounted on various boxes installed on a floor. According to the present invention, a spring can be used as the elastic member 35. It is effective that any one of resonance frequencies of the damping devices 5 is equalized to any one of resonance frequencies of the mounting,portions 43.

According to the aforesaid embodiment, following damping system 1 can be provided.
Type 1: A damping system 1 includes an inner panel 42, a speaker 2 mounted on the inner panel 42, and a damping device 5 mounted on the inner panel 42, and the damping device 5 includes an elastic member 35 mounted on the inner panel 42 and a mass 36 mounted on the elastic member 35.
Type 2: The damping system 1 according to type 1, wherein the damping device 5 includes a plurality of units.
Type 3: The damping system according to type 2, wherein respective mounting portions 43 of the plurality of damping devices are simultaneously vibrated by the speaker 2, and a natural frequency of each unit 5 is equal to that of the mounting portion 43 of each unit of the damping device 5.

The above mentioned embodiments are only typical examples according to the present invention, and the invention is not limited to the embodiments. Various modifications can be made without departing from the scope of the present invention. Incidentally, the contents of Japanese Patent Application No. 2004-166953 are hereby incorporated by reference.

## Claims

1. A damping system comprising:
a frame;
a speaker being mounted on said frame; and
a damping device being mounted on the frame,
whereby said damping device includes an elastic member mounted on the frame and a mass mounted on said elastic member.

2. The damping system according to claim 1, wherein said damping device includes a plurality of units.

3. The damping system according to claim 2, wherein respective mounting portions of the plurality of damping devices are simultaneously vibrated by the speaker, and a natural frequency of each unit is equal to that of the mounting portion of each unit of the damping device.
